# EUROPÄISCHE PATENTANMELDUNG

(11) **EP 0 847 944 A2**
(43) Veröffentlichungstag der Anmeldung: **17.06.1998**
(21) Anmeldenummer: 97810976.7
(22) Anmeldetag: 12.12.1997
(51) Int. Cl.: B65G 47/57, B65G 47/50, B65G 1/04

(54) **Vollautomatische Ein- und Auslagervorrichtungen, mit Lagervorrichtungen in Regallagern**

(30) Priorität: 16.12.1996 CH 3078/96
(71) Anmelder: Saweag AG/SA, 1736 St. Silvester (CH)
(72) Erfinder: Sark, Werner, 1736 St. Silvester (CH)
(74) Vertreter: Meier, Hans Peter

(57) **Zusammenfassung**

Bei der Einrichtung mit Regallagern, mit midestens einem Regalförderzeug, mit Codes versehenen Behältern und eine Steuereinheit ist das Regalförderzeug ein angetriebener Teil einer Ein- und Auslagervorrichtung. Auf diese Weise kann eine optimale Lagerbewirtschaftung erreicht werden.

## Beschreibung

Die Erfindung bezieht sich auf ein automatisches Lagersystem mit Ein-/Auslagervorrichtungen und Lagervorrichtungen in Regallagern zum kontinuierlichen und schnellen be- und entladen von Regallagern. Der Vorteil ist,dass dieses Lagersystem nur an der Ein-und/oder Ausgabestelle bedient werden muss.
Bekannt sind Regalförderzeuge zum Be- und Entladen von Regallagern, die aber ein kontinuierliches Be- und Entladen nicht gestatten und damit geringe Umschlagleistung erbringen und viel Platz zwischen den Regallagern benötigen.

Dieses automatische Lagersystem (s. Figur A, B und F) besteht aus Regallagern ①, Ein- und Auslagerbahnen ⑤ und ⑥, Förderbahnen ② , Behälterumsetzer und Behälter mit Zielcodierleisten und Codierlesevorrichtungen. Ein Behälter wird an einer Eingabestelle Ⓔ mit einer Zielcodierung versehen. Dieser Zielcode wird nun automatisch gelesen und der zentralen Anlagensteuerung (Rechner) übermittelt. Dieser Rechner veranlasst nun, das dieser Behälter über Förderbahnen ② Behälterumsetzer, Uebergabevorrichtung ③ , und der Einlagerbahn ⑤ an die gewünschte Lagerstelle in Regallager ① gefördert wird. Dieser Code kann auch ein beliebiger Code sein, er wird wieder automatisch gelesen und der Rechner veranlasst die Beförderung dieses Behälters an den nächsten freien Einlagerungsplatz im Regallager ① und merkt sich Code und Lagerposition dieses Behälters für eine spätere Auslagerung. An einer Ausgabestelle Ⓐ wird der Code des gewünschten Behälters eingegeben und die zentrale Anlagensteuerung (Rechner) veranlasst nun die Auslagerung dieses Behälters aus dem Regallager ① über die Auslagerbahn ⑥ , Behälterumsetzer, Uebergabevorrichtung ③ und Förderbahnen ② zur Ausgabestelle Ⓐ. Diese Systeme können auch mit vollautomatischen Warenaufzügen gekoppelt und betrieben werden, zum Verteilen (auslagern) bzw. Einsammeln (einlagern) von Waren und Gütern in einem oder mehreren Gebäudekomplexen mit Produktionsstrassen bzw. Lagern. Vor einer beliebigen Eingabestelle werden die Behälter bis ins Regallager bzw. vom Regallager an einem Produktionsort oder andere Ausgabestelle automatisch und schnell gefördert.

Beschreibung einer vollautomatischen Ein- und Auslagervorrichtung mit Lagervorrichtungen in einem Regallager.

Lagerungssystem zum schnellen, kontinuierlichen und automatischen Einlagern, Lagern und Auslagern von Behältern in Regallagern. Beförderung gleichzeitig mehrer Behälter auch mit unterschiedlicher Codierung zur Einlagerung, Auslagerung bzw. Ein- und Aus-Lagerung möglich.
Lagersystem bestehend aus:
- Behälter und/oder, Paletten und/oder andere lagerfähige Verpackungen bzw. Vorrichtungen, in der Beschreibung kurz "Behälter" genannt, mit der Möglichkeit der Anbringung einer ZielCodierung.
- Code-Lesevorrichtung, für die an den Behältern angebrachten Ziel- Informationen zum Lagern, befinden sich entweder bei der Eingabestelle oder/und an den Behälterumsetzern, an der Einlagervorrichtung oder an einer für den automatischen Ablauf notwendigen Stelle.
- Angetriebene Förderbahnen ② können, Rollenbahnen, Bandförderer, Kettenförderer, Rollenförderer usw. sein, in der folgenden Beschreibung kurz "angetriebene Förderbahnen" genannt.
- Hochregallager ähnliches Lager ① mit angetriebenen Förderbahnen (mit eigenem Antrieb oder Fremdantrieb, zum Beispiel der Be- bzw. Entladekabine) zur Aufnahme der Behälter und unterschiedlicher Länge zur Einlagerung/Auslagerung und Lagerung von Behältern mit beliebigen Abmessungen in der nachfolgenden Beschreibung kurz "Regallager" genannt.
- Vorrichtung zur 90°-Verschiebung bzw. Drehung der Behälter auf den Förderbahnen zur Förderrichtung, zum Beispiel an Abzweigungen oder vor Kabinen, in der Beschreibung "Behälterumsetzer" genannt.
- Ein- und Auslagerungsvorrichtung (s. Figur C) für Behälter in den Regallagern, bestehend aus:
   - Paternosteraufzug mit Kabinen ④ oder ähnlicher Endlosförderer mit beliebiger Anzahl und Grösse der Kabinen und beliebiger Förderhöhe, mit Positionier-Antrieb für Kabinen und Paternoster in beide Drehrichtungen (Arbeitsrichtungen), in der Beschreibung kurz "Paternosteraufzug" genannt.
      - Jede Kabine besitzt eine angetriebene Förderbahn (Antrieb für beide Drehrichtungen) zum Be- bzw. Entladen der Behälter in die bzw./aus der Kabine und ein Behälterumsetzer zum Be- bzw. Entladen der Regallager von der Kabine aus. Je nach Förderrichtung der Förderbahnen kann sich der Behälterumsetzer vor, nach oder in der Kabine befinden.
      - Der Antrieb der Förderbahn in der Kabine bzw. der Antrieb der Behälterumsetzer in oder vor der Kabine kann über eine Magnetkupplung oder ähnliche Vorrichtung die Förderbahnen im Regallager zum Ein- bzw. Auslager antreiben bzw. umgekehrt der Förderbahnenantrieb im Regallager treibt über eine Magnetkupplung oder ähnliche Vorrichtung die Winkelübergabevorrichtung bzw. Förderbahn in der Kabine an.
   - Ein-/Auslagerbahnen ⑤ und ⑥ sind Förderbahnen mit oder ohne Behälterumsetzer zum Be- bzw. Entladen der Kabinen im Paternoster ④ und können in unterschiedlichen Höhen an beiden Seiten oder auf der gleichen Seite am Paternoster angeordnet werden. In der nachfolgenden Beschreibung, kurz "Ein-/Auslagervorrichtung" genannt.
- Anpass- und Uebergabevorrichtung ③ von einem angetriebenen Förderbahn ② an die Einlagerbahn ⑤ bzw. von der Auslagerbahn ⑥ an ein Förderband können Rollenbahnen, Rutschen, Band- bzw. Kettenförderer, usw. sein.
- Eine Ein-/Auslagervorrichtung (s. Figur C) kann auch für "nur Einlagerungen" oder "nur Auslagerungen" des Regallagers an unterschiedlichen Seiten verwendet werden, siehe Figur B.
- Ein Regallager kann auch von zwei oder mehreren Ein-/Auslagervorrichtungen oder nur Ein- oder Auslagervorrichtungen bedient werden, siehe Figur A + B.
- Ein- und Ausgabestellen Ⓔ und Ⓐ können auf der gleichen Seite, gegenüberliegend oder an verschiedenen Stellen des Regallagerbereiches angeordnet werden, siehe Figur A + B.
- Falls in einem bestehenden Gebäude die Raumhöhe zu gering ist für eine wirtschaftliche Nutzung eines Regallagers, können mit diesem Paternoster durch Deckenöffnungen in andere Etagen ebenfalls Regallager bedient werden, wobei sich die Ein- bzw. Ausgabestellen in der gleichen oder verschiedenen Etagen befinden können.

Ersatz des Paternosters ④ (Endlosförderer) durch einen festen Rahmen mit darin beliebig übereinander und nebeneinander angeordneten Kabinen, wobei der Rahmen (mit eigenem Antrieb) mit den Kabinen, oder im Rahmen und die Kabinen mit eigenem Antrieb, oder Rahmen und Kabinen mit getrennten Antrieben gleichzeitig bewegt werden können (zum Positionieren der Kabinen zur Be- bzw. Entladen des Regallagers).
Als Positionier-Antrieb können Ketten- oder Seilantriebe, Zahnstangen bzw. Spindelantriebe, Hydraulikantriebe usw. eingesetzt werden. In der Beschreibung kurz "Rahmenförderer" genannt. Die Kabinen in Rahmenförderern haben dieselbe Ausrüstung und Aufgabe wie Kabinen von Paternosteraufzügen. Je nach Förderrichtung der Förderbahnen in der Kabine, im Regallager bzw. Ein-/Auslagervorrichtung für die Kabine kann sich der Behälterumsetzer in oder vor/nach der Kabine befinden.

Code-Lesevorrichtungen, für die an den Behältern befestigten Informationen zum Lagern, können sich entweder bei der Eingabestelle oder/und an den Behälterumsetzern für die Einlagervorrichtung oder/und an der Uebergabestelle an die Kabine des Rahmenförderers, oder an einer für den automatischen Ablauf notwendigen Stelle befinden.

Diese Rahmenförderer/Förderrahmen können einzeln oder in Gruppen mit den entsprechenden Einlager-/Auslagervorrichtungen (Förderbänder) zum Be- und Entladen eines Regallagers eingesetzt werden. Sie können so angeordnet werden, dass sie einzeln oder in Gruppen nur Ein- oder Auslagern oder gleichzeitig Ein- und Auslagern, s. Figur A, B und C.

Nachfolgend wird ein Ausführungsbeispiel der Erfindung an Hand von Zeichnungen näher erläutert.
In Figur C und D sind in einer Seitenansicht Ein-/Auslagervorrichtungen mit Paternosteraufzug mit Kabinen ④ dargestellt. Die Figuren A und B zeigen eine Draufsicht einer Regallagerordnung mit Ein-/Auslagerbahnen ⑤/⑥.
In Figur D ist der Paternoster um 90° gedreht dargestellt und ermöglich somit die Ein-/Auslagerung von Behältern an zwei nebeneinander angeordneten Regallagern ① gleichzeitig, siehe Figur F (Draufsicht einer Regallageranordnung mit 90° gedrehten Paternoster ④ mit, Ein-/Auslagerbahnen ⑤ / ⑥ zwischen den Regallagern ①).

An einer Eingabestelle Ⓔ wird ein Behälter mit einem Zielcode eingegeben. Eine zentrale Recheneinheit steuert nun über die Antriebe der Förderbänder ② , der Uebergabevorrichtung ③, der Einlagerbahn ⑤ und des Paternosteraufzug mit Kabinen ④ den Behälter ins Regallager ① und speichert diese Position.

Die Auslagerung erfolgt analog umgekehrt. An der Angabestelle Ⓐ wird der gewünschte Code des Behälters eingegeben. Der zentrale Rechner ermittelt die Lagerposition dieses Behälters und steuert über die Antriebe des Regallagers ①, des Paternosters mit Kabinen ④ der Auslagerbahn ⑥ , einer Uebergabevorrichtung ③ und des Förderbandes ② den Behälter an die Ausgabestelle Ⓐ.

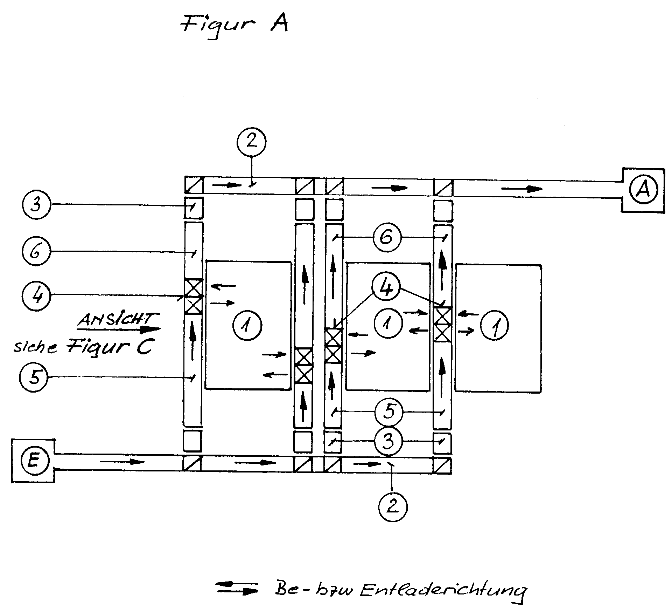

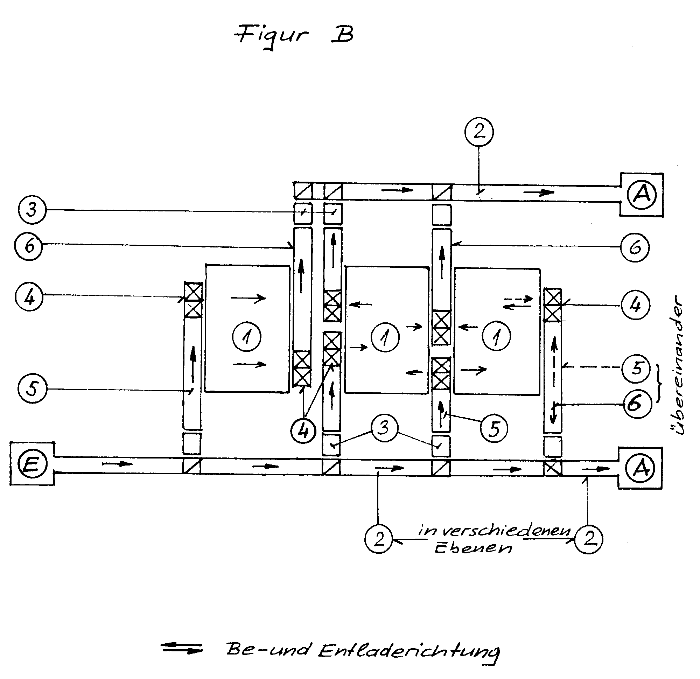

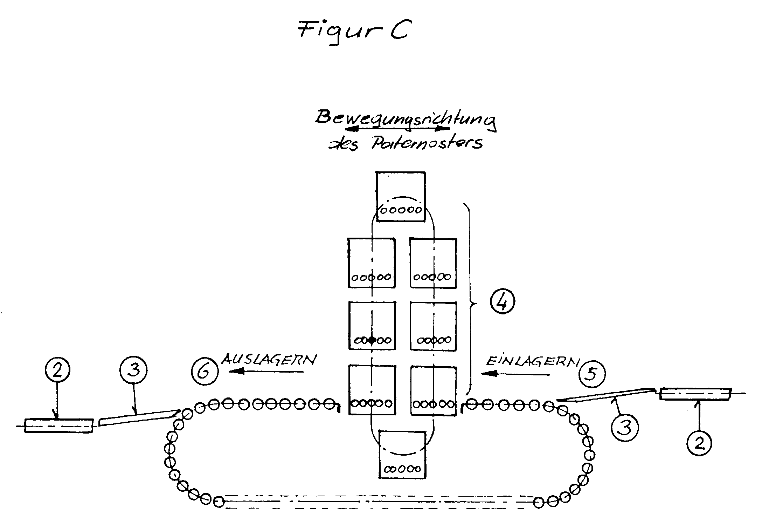

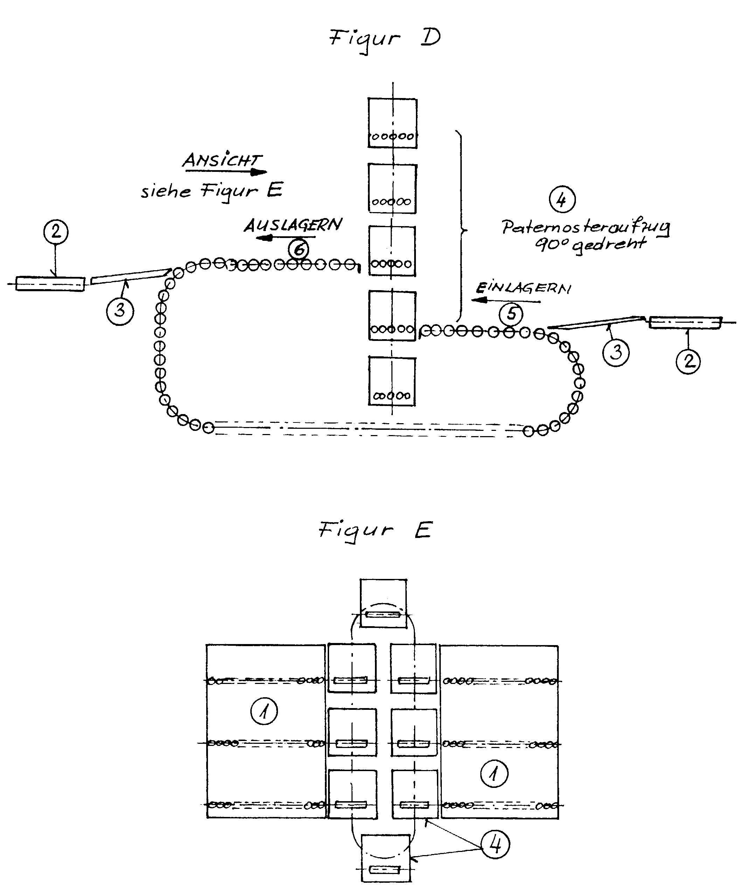

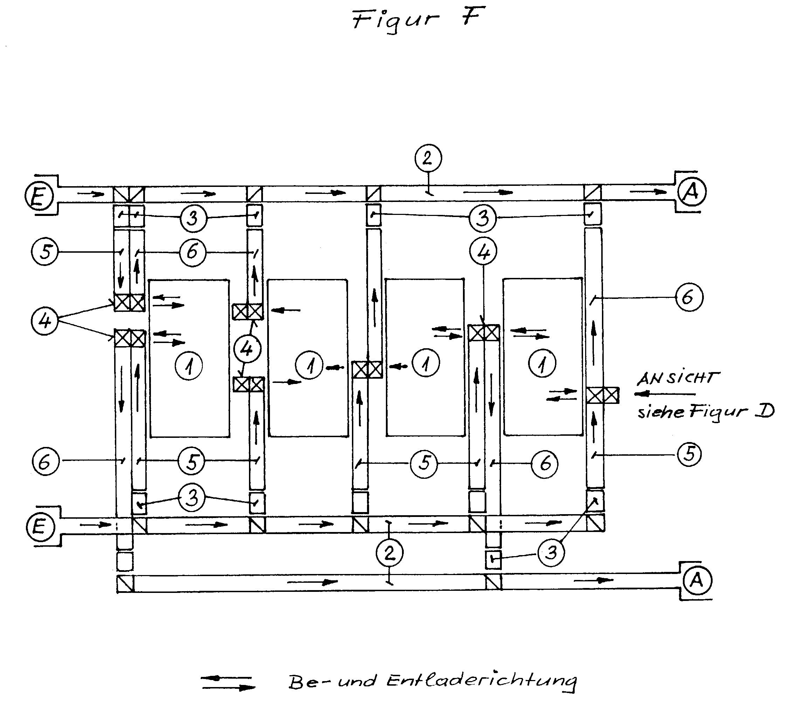

## Patentansprüche

1. Vollautomatische Ein-/Auslagervorrichtungen mit Lagervorrichtungen in Regallagern mit mindestens einem Regalförderzeug, mit Codes versehenen Behältern und einer Steuereinheit, dadurch gekennzeichnet, dass das mindestens eine Regalförderzeug ein angetriebener Teil einer Ein- und Auslagervorrichtung ist.

2. Einrichtung nach Anspruch 1, dadurch gekennzeichnet, dass das Regalförderzeug ein Paternosteraufzug ist.

3. Einrichtung nach Anspruch 1, dadurch gekennzeichnet, dass das Regalförderzeug ein fester Rahmen mit darin über-und/oder nebeneinander angeordneten, angetriebener Kabinen ist.

4. Einrichtung nach Anspruch 2, dadurch gekennzeichnet, dass der Paternosteraufzug zum Positionieren der Kabinen mit einem eigenen Antrieb versehen ist.

5. Einrichtung nach Anspruch 4, dadurch gekennzechnet, dass die Antriebe der Förderbahnen der Kabinen des Paternosteraufzuges vor den Regallagern mit einer Kupplung versehen sind, zum Antrieb eines Behälterumsetzers und/oder der Förderbahnen in den Regallagern.

6. Einrichtung nach Anspruch 4, dadurch gekennzeichnet, dass der Antrieb der Förderbahnen in den Regallagern über eine Kupplung einen Behälterumsetzer und/oder die Förderbahnen in den Kabinen des Paternosters antreibt.
